# EUROPÄISCHE PATENTANMELDUNG

(11) **EP 2 090 875 A2**
(43) Veröffentlichungstag der Anmeldung: **19.08.2009**
(21) Anmeldenummer: 09002113.0
(22) Anmeldetag: 16.02.2009
(51) Int. Cl.: G01M 3/22, G01M 3/38

(54) **Verfahren zur Dichtheitsprüfung der Anlage einer Abdichteinheit eines Dichtpackers an einer Rohrwandung**

(30) Priorität: 16.02.2008 DE 102008009538
(71) Anmelder: IBAK HELMUT HUNGER GmbH & CO. KG, 24478 Kiel (DE)
(72) Erfinder: Weber, Manfred, D-24253 Passade (DE)
(74) Vertreter: Vollmann, Heiko

(57) **Zusammenfassung**

Bei dem Verfahren zur Dichtheitsprüfung einer Abdichteinheit eines Dichtpackers an einer Rohrwandung (5; 5') wird ein Prüfgas in einem von der Abdichteinheit (10; 10'; 10"; 10"') in einem Rohrsystem begrenzten Prüfraum (26; 26'; 26"; 26"') eingebracht. Im Anschluss wird geprüft, ob das Prüfgas an einer vom Prüfraum abgewandten Seite der Abdichteinheit (10; 10'; 10"; 10"') austritt.

Der Dichtpacker zum Prüfen der Dichtheit eines Rohrsystems weist zumindest eine Abdichteinheit (10; 10'; 10"; 10"') zur dichtenden Anlage an einer Rohrwandung (5; 5') zur Begrenzung eines Prüfraums (26; 26'; 26"; 26"') in dem Rohrsystem auf. Dabei ist an einem Dichtpacker auf der dem Prüfraum (26; 26'; 26"; 26"') zugewandten Seite der zumindest einen Abdichteinheit (10; 10'; 10"; 10"') eine Prüfgasquelle (30) zum Ausbringen eines Prüfgases angeordnet.

## Beschreibung

Die Erfindung betrifft ein Verfahren zur Dichtheitsprüfung einer Abdichteinheit eines Dichtpackers an einer Rohrwandung sowie einen Dichtpacker zum Prüfen der Dichtheit eines Rohrsystems.

Um die Dichtheit von Rohren oder Rohrsystemen zu prüfen, wird entlang eines zu prüfenden Abschnitts eines Rohres oder eines Rohrsystems, etwa eines Kanalrohres, ein Prüfraum gebildet, indem an einer, vorzugsweise zwei Stellen des Rohrsystems Abdichteinheiten in Form von Absperrblasen oder Dichtmanschetten in einem Dichtpacker in das Rohrsystem eingebracht werden. Diese Abdichteinheiten werden an der Rohrwandung zur Anlage gebracht und können das Rohr oder Rohrsystem entlang eines Rohrquerschnittes dicht abschließen. Der so gebildete Prüfraum wird mit einem Über- oder Unterdruck beaufschlagt, welcher während einer Prüfzeit überwacht wird. Weicht dieser Prüfraumdruck nach der Prüfzeit nicht zu stark vom beaufschlagten Druck ab, wird der durch den Prüfraum definierte Abschnitt des Rohrsystems als dicht bezeichnet. Kommt es hingegen im Prüfraum zu auffälligen Druckänderungen, so kann dies zum einen von einem undichten Rohr- oder Rohrsystem herrühren. Zum anderen besteht allerdings auch die Möglichkeit, dass eine oder mehrere Abdichteinheiten nicht dicht mit der Rohrwandung abschließen, so dass die unzureichende Anlage der Abdichteinheit die Druckprüfung verfälscht.

Somit stellt sich bei der Dichtheitsprüfung von Rohrsystemen die Aufgabe, den dichtenden Abschluss der Abdichteinheiten mit der Rohrwandung ebenfalls zu prüfen. Im Stand der Technik werden dazu zusätzliche Abdichteinheiten in Form von Referenzraumblasen verwendet, die einen Referenzprüfraum abdichten, welcher den eigentlichen Prüfraum umgibt. Nachteilhaft erfordert die Bildung eines solchen Referenzprüfraumes zusätzliche Abdichteinheiten und entsprechend einen stark vergrößerten Bauraum für die Gerätschaften. Damit reduziert sich der Einsatz derartiger Systeme auf wenige Spezialfälle. Zudem erfordert die Dichtheitsprüfung in diesen Fällen aufwändig eine komplexe Messtechnik bei der Bewertung der Druckstabilität und es kann auch nicht sichergestellt werden, dass die zusätzlichen Abdichteinheiten den Referenzprüfraum richtig abdichten.

Es ist daher Aufgabe der Erfindung, auf einfache Weise eine sichere Überprüfung der dichtenden Anlage einer Abdichteinheit eines Dichtpackers an einer Rohrwandung zu ermöglichen.

Diese Aufgabe wird durch ein Verfahren mit den in Anspruch 1 angegebenen Merkmalen sowie durch einen Dichtpacker mit den in Anspruch 7 angegebenen Merkmalen gelöst. Bevorzugte Ausführungsformen ergeben sich aus den zugehörigen Unteransprüchen, der nachfolgenden Beschreibung und der Zeichnung.

Das erfindungsgemäße Verfahren ermöglicht die Dichtheitsprüfung einer Abdichteinheit eines Dichtpackers und insbesondere der Anlage der Abdichteinheit an einer Rohrwandung. Dazu wird, nachdem die Abdichteinheiten an der Rohrwandung zur Anlage gebracht worden sind, in einem von einer Abdichteinheit in einem Rohrsystem begrenzten Prüfraum ein Prüfgas eingebracht. Anschließend wird geprüft, ob das Prüfgas an einer vom Prüfraum abgewandten Seite der Abdichteinheit austritt. So kann eine nicht völlig dicht mit der Rohrwandung abschließende Abdichteinheit an dem Austritt des Prüfgases erkannt werden. Da dieses Verfahren keinen Referenzprüfraum benötigt, sind keine zusätzlichen Abdichteinheiten erforderlich. Auf diese Weise kann der Bauraum des Dichtpackers klein gehalten werden, so dass sich das erfindungsgemäße Verfahren universell einsetzen lässt. Zudem ist keine komplizierte Messtechnik erforderlich, da keine Druckmessungen im Referenzprüfraum anfallen. Vorteilhafterweise ist ein rein qualitativer Nachweis des Prüfgases zur Prüfung der Abdichteigenschaften der Abdichteinheit hinreichend, so dass keine quantitative Messung erforderlich ist. Entsprechend ist das Verfahren besonders einfach einsetzbar.

Zweckmäßigerweise wird in dem Verfahren das Prüfgas mittels einer am oder im Prüfraum angeordneten Prüfgasquelle in den Prüfraum eingebracht und/oder im Prüfraum erzeugt. So kann der Prüfraum leicht mit dem Prüfgas gefüllt werden. Geeignet wird die Prüfgasquelle zusammen mit dem Dichtpacker in das Rohr oder Rohrsystem eingebracht, so dass das Verfahren effizient ausgeführt werden kann.

Bevorzugt ist das Prüfgas ein Gas, ein Gasgemisch oder Rauch.. Somit lassen sich die Abdichteinheiten entlang ihres gesamten Anlagebereichs ohne großen Aufwand und zuverlässig auf eventuelle Undichtheiten prüfen. Vorzugsweise wird in dem Verfahren ein farbiges Gas oder farbiger Rauch benutzt. Der Austritt dieses farbigen Prüfgases durch die Abdichteinheiten ist daher bereits durch bloße Inaugenscheinnahme der Abdichteinheit erkennbar, sodass auf aufwändige Nachweistechniken verzichtet werden kann. Im Falle von Rauch bildet bevorzugt Luft das Trägergasgemisch. Je nach Ausgestaltung der Erfindung können allerdings auch andere Gase oder Gasgemische als Trägergas bzw. Trägergasgemisch geeignet sein. Es ist darüber hinaus denkbar, dem Prüfgas fluoreszierende Stoffe zuzusetzen, welche bei Austritt unter UV-Licht sichtbar werden.

In einer bevorzugten Ausgestaltung des Verfahrens erfolgt die Erzeugung des Prüfgases durch Temperatur- und/oder Dichteänderungen eines bereits im Prüfraum vorhandenen und/oder in den Prüfraum eingebrachten Stoffes oder durch eine chemische Reaktion. Beispielsweise lässt sich im einfachsten Falle im Prüfraum vorhandene Luft erhitzen und der Austritt dieses Prüfgases auf der anderen Seite der Abdichteinheiten durch Schlierenbildung erkennen. Die erhitzte Luft bildet dabei das Prüfgas. Die Erzeugung des Prüfgases im Prüfraum selbst ermöglicht dabei einen zweifelsfreien Nachweis von Undichtheiten, da außerhalb des Prüfraums nachgewiesenes Prüfgas nicht auf Undichtheiten an anderer Stelle, etwa einer Gaszuführung zurückführbar ist.

Bevorzugt ist das Verfahren derart ausgestaltet, dass der Austritt des Prüfgases an einer vom Prüfraum abgewandten Seite der Abdichteinheit mittels visueller Kontrolle, vorzugsweise unter Zuhilfenahme einer Kamera, geprüft wird. Auf diese Weise lässt sich ein Austritt des Prüfgases besonders leicht und unaufwändig feststellen, da so auf komplexe Nachweistechniken verzichtet werden kann. Die erforderliche Kamera ist in der Regel ohnehin schon in einem Kanalinspektionssystem vorhanden, so dass hier keine zusätzlichen Einrichtungen erforderlich sind.

Alternativ kann in einer weiteren Ausgestaltung des Verfahrens der Austritt des Prüfgases an einer vom Prüfraum abgewandten Seite der Abdichteinheit mittels eines Detektors geprüft werden. Je nach zu detektierender Eigenschaft des entsprechend ausgebildeten Prüfgases ergeben sich verschiedene Auswahlmöglichkeiten für geeignete Detektoren. Zweckmäßigerweise lassen sich etwa Kameras verwenden, die ggf. optische Eigenschaften des Prüfgases im nicht sichtbaren Spektralbereich auflösen können, oder Detektoren, die den Nachweis des Prüfgases vermittels chemischer Sensoren, Massenspektrometer oder Rauchgasmelder bewerkstelligen.

Neben dem beschriebenen Verfahren betrifft die Erfindung einen Dichtpacker zum Prüfen der Dichtheit eines Rohrsystems, der zumindest eine Abdichteinheit enthält, welche zur dichtenden Anlage an einer Rohrwandung zur Begrenzung eines Prüfraumes in dem Rohrsystem ausgebildet ist. Dabei ist an dem Dichtpacker auf der dem Prüfraum zugewandten Seite der zumindest einen Abdichteinheit eine Prüfgasquelle zum Ausbringen eines Prüfgases angeordnet. Mit einem so ausgebildeten Dichtpacker kann der Prüfraum leicht mit dem Prüfgas ausgefüllt werden. An der zumindest einen Abdichteinheit sind dabei zusätzliche Abdichteinheiten zur Ausbildung eines Referenzraumes nicht vorgesehen.

Bevorzugt ist der Dichtpacker so ausgestaltet, dass er zumindest zwei voneinander beabstandete Abdichteinheiten zur Begrenzung des Prüfraumes aufweist. Ein solcher Dichtpacker eignet sich besonders zur Dichtheitsprüfung von unverzweigten Rohren, insbesondere von Kanalrohren. Beispielsweise kann so die Verbindungsstelle zwischen zwei Rohrabschnitten geprüft werden, indem hier eine der beiden Abdichteinheiten in je einem der beiden verbundenen Rohrabschnitte zur Anlage kommt und sich der Prüfraum entlang der Rohrverbindung erstreckt.

Bevorzugt ist die Prüfgasquelle zum Einbringen und/oder zur Erzeugung eines, vorzugsweise farbigen, Gases und/oder Rauchs in dem Prüfraum vorgesehen. Auf diese Weise lässt sich wie in obigem Verfahren geschildert der Prüfraum leicht mit dem Prüfgas ausfüllen. Im Falle eines farbigen Gases oder farbigen Rauchs kann der Austritt des Prüfgases an einer vom Prüfraum abgewandten Seite der Abdichteinheit leicht durch direkte Inaugenscheinnahme festgestellt werden.

In einer weiteren bevorzugten Ausgestaltung ist die Prüfgasquelle zur Temperatur- und/oder Dichteveränderung eines bereits im Prüfraum vorhandenen und/oder eingebrachten Stoffes oder zur Erzeugung des Prüfgases durch eine chemische Reaktion vorgesehen. So ist z. B. eine Prüfgasquelle durch eine Vorrichtung realisiert, die die im Prüfraum befindliche Luft aufheizt, so dass diese beim Austritt aus dem Prüfraum Schlieren ausbildet. In einer weiteren bevorzugten Ausführungsform weist die Prüfgasquelle einen Gasgenerator auf. Dieser Gasgenerator kann z. B. als Rauchgenerator ausgestaltet sein. Somit lässt sich das Prüfgas im Prüfraum erzeugen. Alternativ weist die Prüfgasquelle ein Gasreservoir auf. In dieser Ausgestaltung muss entsprechend das Gas nicht in der Prüfgasquelle generiert werden, sondern kann bis zur Ausbringung des Prüfgases gespeichert werden. In einer anderen bevorzugten Ausgestaltung weist die Prüfgasquelle eine Gaszuleitung zum Prüfraum oder einen an den Prüfraum angrenzenden Gasdurchlass auf. In einer solchen Ausgestaltung ist die Prüfgasquelle also durch eine Zufuhr von außen und eine Einspeisung des Gases in den Prüfraum realisiert.

Vorzugsweise ist auf der vom Prüfraum abgewandten Seite der Abdichteinheit ein auf das Prüfgas sensitiver Detektor angeordnet. Dabei ist der Detektor zum Nachweis charakteristischer Eigenschaften des Prüfgases empfindlich. Abhängig von dem eingesetzten Prüfgas kommt daher eine Vielzahl von möglichen Detektoren in Frage. So kann der Detektor etwa als Kamera für nicht sichtbare optische Spektralbereiche ausgebildet sein, oder chemische Sensoren, Massenspektrometer oder Rauchgasmelder aufweisen. In einer besonders vorteilhaften Ausgestaltung ist auf der vom Prüfraum abgewandten Seite der Abdichteinheit eine Kamera zur visuellen Kontrolle der Abdichteinheit angeordnet. Auf diese Weise kann ein Austritt eines vorzugsweise farbigen Prüfgases zeitnah und ohne aufwändige Datenverarbeitung durch Betrachtung des Kamerabildes nachgewiesen werden. Dabei wird vorzugsweise die Kamera eines üblichen Kanalprüfsystems eingesetzt.

Nachfolgend wird die Erfindung beispielhaft anhand der beigefügten Figuren beschrieben. Darin zeigen:
- Fig. 1: einen Dichtpacker zur Durchführung des erfindungsgemäßen Verfahrens zur Dichtheitsprüfung der Anlage einer Abdichteinheit eines Dichtpackers an einer Rohrwandung schematisch im Schnitt,
- Fig. 2: einen weiteren Dichtpacker zur Durchführung des erfindungsgemäßen Verfahrens an einer Rohrverzweigung schematisch im Schnitt,
- Fig. 3: einen weiteren Dichtpacker zur Durchführung des erfindungsgemäßen Verfahrens an einer Rohrmuffe schematisch im Schnitt,
- Fig. 4: einen weiteren Dichtpacker zur Durchführung des erfindungsgemäßen Verfahrens, welcher mit einem gemeinsamen Träger ausgebildet ist, schematisch im Schnitt und
- Fig. 5: den Dichtpacker gemäß Fig. 4 mit einem Antrieb schematisch im Schnitt.

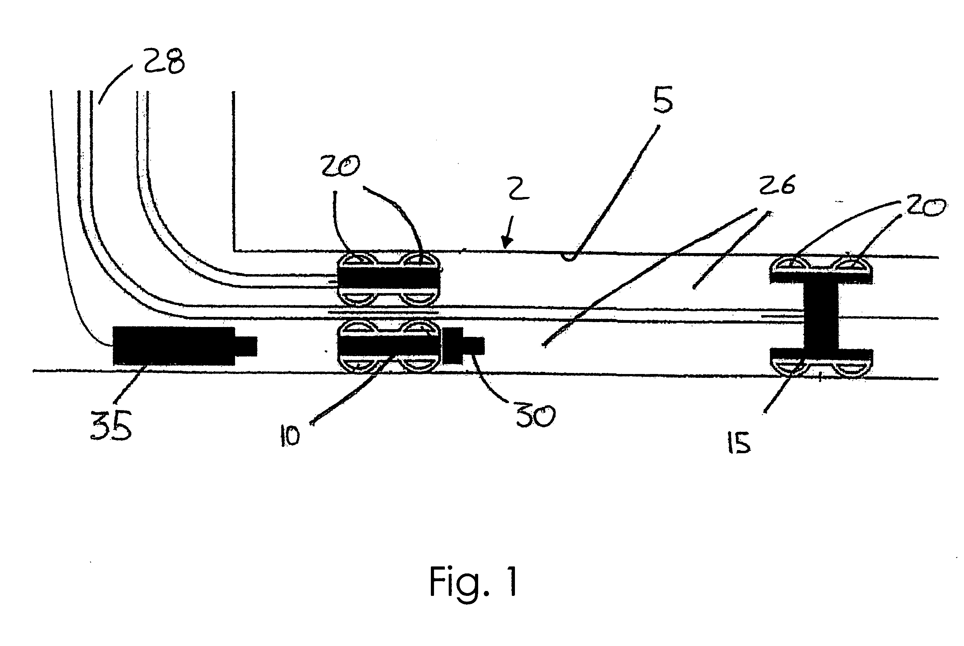

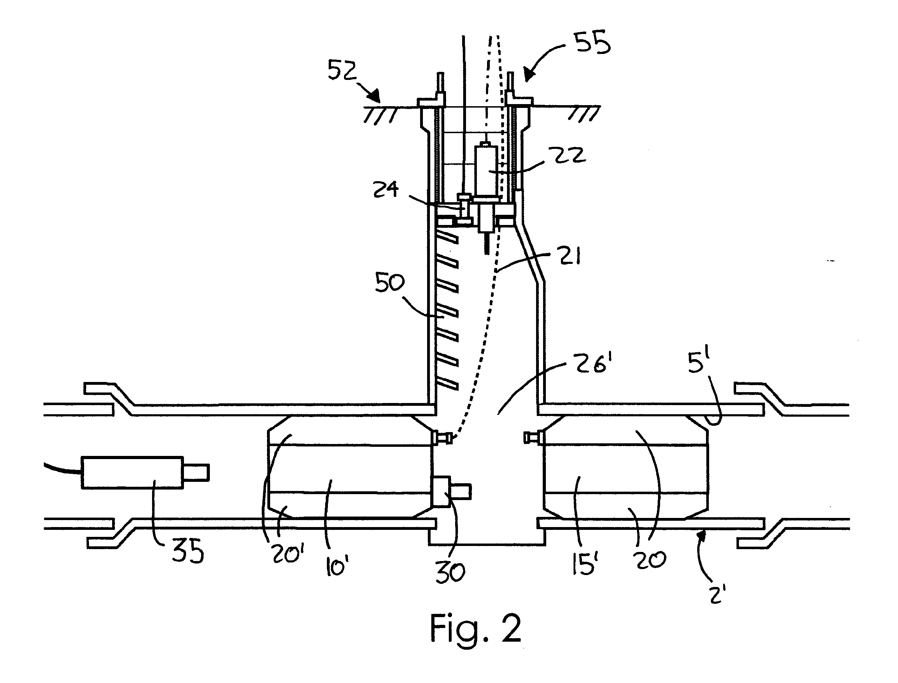

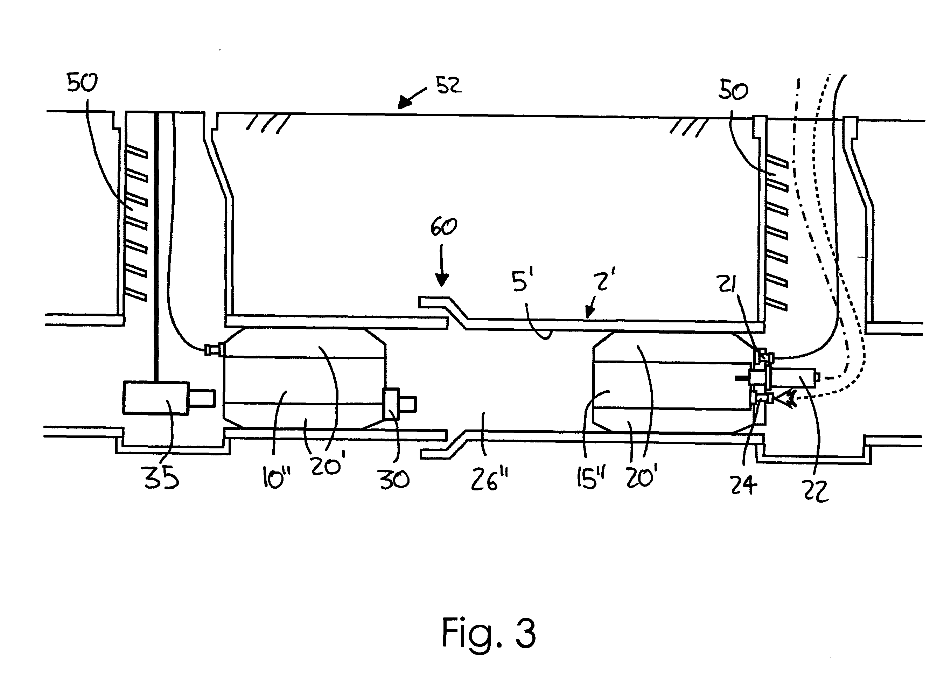

Zunächst seien die grundlegenden Gemeinsamkeiten sämtlicher Ausführungsbeispiele näher erläutert: Die in den Figuren dargestellten Dichtpacker befindet sich jeweils zur Dichtheitsprüfung in einem Rohr 2; 2' eines Rohrsystems. Die Dichtpacker weisen dazu jeweils zwei Abdichteinheiten 10; 10', 10", 10''' und 15; 15'; 15"; 15''' auf, die über Dichtkissen 20; 20'; 20" mit der Wandung 5; 5' des Rohres 2; 2'dicht abschließen. Beispielsweise lassen sich die Dichtkissen 20; 20'; 20" über Luftzuführungen 21, wie in Fig. 2, 3 und 5 gezeigt, aufblasen. Dabei bilden die beiden Abdichteinheiten 10; 10'; 10"; 10''' und 15; 15'; 15"; 15''' einen Prüfraum 26; 26'; 26"; 26''' mit der Wandung des Rohres 5; 5' und gegebenenfalls weiteren Elementen, wie beispielsweise weiteren Abdichteinheiten aus. Zur Dichtheitsprüfung des Rohres 2; 2' kann der Prüfraum 26; 26'; 26"; 26''' mit einem Über- oder Unterdruck beaufschlagt werden, mittels dessen Überwachung die Rohrdichtheit überprüft werden soll. Die hierzu erforderlichen Komponenten des Dichtpackers sind an sich bekannt und in den Figuren 1, 4 und 5 nicht dargestellt. Beispielhaft allerdings sind solche Komponenten in den Figuren 2 und 3 abgebildet: Die Beaufschlagung des Prüfraums mit Über- bzw. Unterdruck erfolgt hier über eine Pumpe 22, welche Luft bzw. Gas in den Prüfraum 26; 26'; 26''; 26''' hinein- bzw. aus dem Prüfraum 26; 26'; 26"; 26''' hinauspumpt. Die Überwachung des Prüfraumdrucks erfolgt über einen Drucksensor 24, welcher an einer der Abdichteinheiten, die gemeinsam mit der Rohrwandung 5; 5' den Prüfraum bilden, (z.B. an der Abdichteinheit 15" in Fig. 3) angeordnet ist.

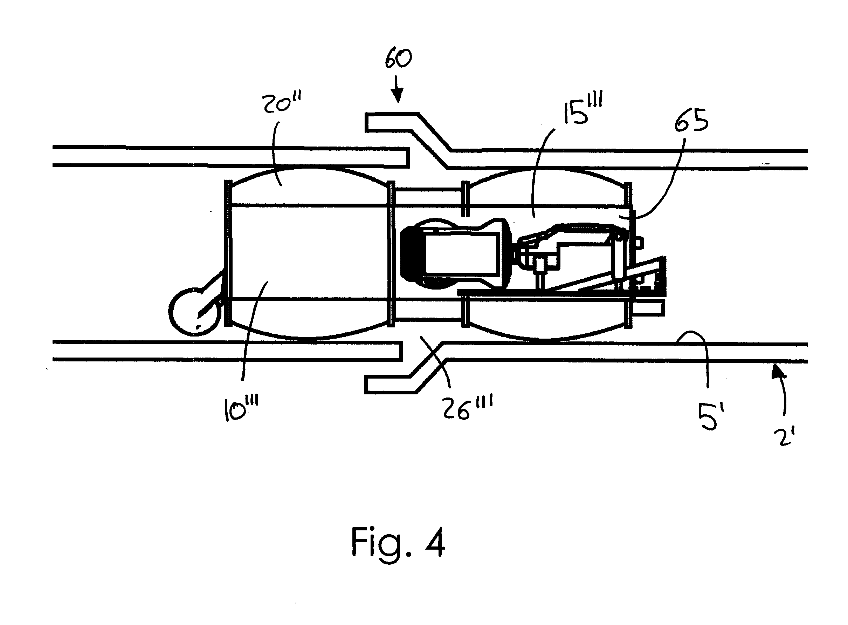

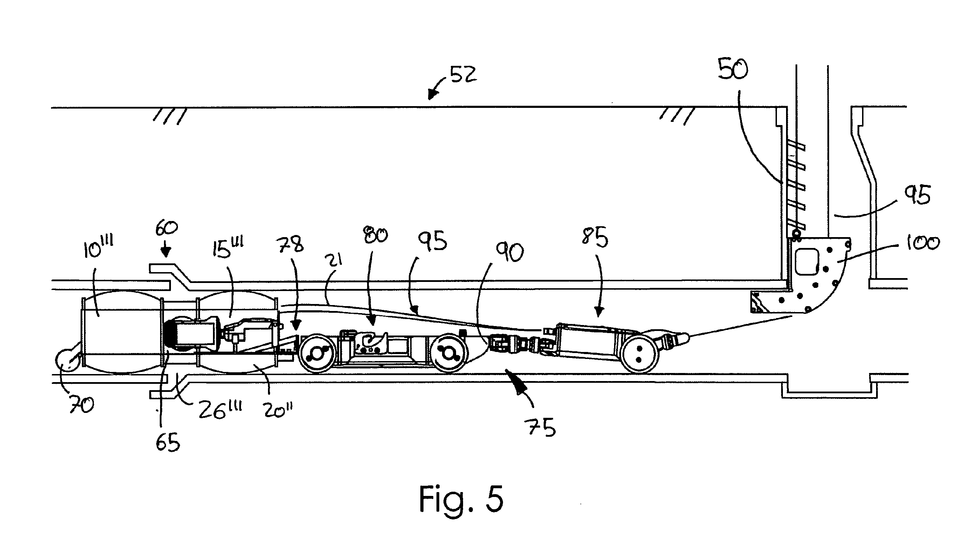

Kritisch für die Rohrprüfung ist die dichte Anlage der Abdichteinheiten 10; 10'; 10"; 10''' und 15; 15'; 15"; 15"' bzw. gegebenenfalls die Dichtheit der Abdichteinheiten bei der Durchführung weiterer Packerkomponenten (in Figur 1 ist beispielhaft die Durchleitung eines Positioniermittels 28 durch die Abdichteinheit 10 des Dichtpackers gezeigt). Die Dichtheit der Anlage der Abdichteinheit 10; 10', 10", 10''' kann nun geprüft werden, indem der Prüfraum 26, 26', 26", 26''' mit einem Überdruck beaufschlagt und der Prüfraum 26, 26', 26", 26''' zugleich über eine Rauchmaschine 30 mit einem farbigen Rauch ausgefüllt wird. Die Rauchmaschine 30 ist in den Figuren 1 bis 3 beispielhaft gezeigt und in den Figuren 4 und 5 nicht dargestellt. Anstelle der Rauchmaschine 30 sind auch andere Prüfgasquellen anordbar. Der Austritt des Rauchs aus dem Prüfraum 26, 26', 26'', 26''' auf der vom Prüfraum 26, 26', 26", 26''' abgewandten Seite der Abdichteinheit 10; 10'; 10"; 10''' kann über eine Videokamera 35 überwacht werden. Zu diesem Zweck kann die Videokamera 35 an der Abdichteinheit 10; 10'; 10''; 10''' angebracht sein (Die Montage ist in den Zeichnungen nicht dargestellt), oder aber separat in das Rohr 2; 2' bzw. den Kanal eingeführt werden.

Die Dichtheit der Anlage der Abdichteinheit 10; 10'; 10"; 10''' kann daher geprüft werden, ohne dass zusätzliche Abdichteinheiten dabei einen Referenzraum ausbilden. So sind bei der Abdichteinheit 10 in Fig. 1 zwischen den Dichtkissen 20 der Abdichteinheit 10 keinerlei Messeinrichtungen für Referenzmessungen, wie beispielsweise Referenzdruckmessungen, zwischen den Dichtkissen vorgesehen. Die beiden Dichtkissen 20 der Abdichteinheit 10 bilden daher keinen Referenzraum aus. Vielmehr können die Abdichteinheiten 10, 15 in Fig. 1 auch durch die Abdichteinheiten der Figuren 3 bis 5 ersetzt werden.

Bei dem in Fig. 1 dargestellten Beispiel ist der Prüfraum 26 dabei allein durch die beiden Abdichteinheiten 10, 15 (hier inklusive des durch die Abdichteinheit 10 durchgeführten Positioniermittels 28) und durch die Wandung 5 des Rohres 2 begrenzt.

In dem Ausführungsbeispiel gemäß Fig. 2 bildet das Rohr 2' einen Kanalabschnitt eines Kanalsystems. Das Rohr 2' ist über eine Verzweigung 45 mit einem Ende eines senkrecht zum Kanalabschnitt verlaufenden, rohrförmigen Schacht 50 verbunden. Der Schacht 50 verbindet das Kanalsystem mit der Erdoberfläche 52. Die beiden Abdichteinheiten 10', 15' sind dabei beiderseits der Verzweigung 45 in dem Rohr 2' gelegen. Der Prüfraum 26' ist daher durch den zwischen beiden Abdichteinheiten gelegenen Raum des Rohres 2' sowie durch den Innenraum des Schachts 50 gebildet. Der Prüfraum 26' wird dabei zum einen durch die beiden Abdichteinheiten 10', 15' und die Wandung 5' des Rohres 2' bzw. des Schachts 50 gebildet. Zur Abdichtung des Prüfraums 26' gegenüber der Öffnung des Schachts 50 an der Erdoberfläche 52 ist der Schacht 50 an der Erdoberfläche 52 mit einem Schachtdeckel 55 dicht verschlossen. Der Schachtdeckel 55 bildet somit eine dritte Abdichteinheit zur Abdichtung des Prüfraums 26' in dem aus dem Kanalabschnitt und dem Schacht 50 gebildeten Rohrleitungssystem aus.

Bei dem in Fig. 3 gezeigten Ausführungsbeispiel bilden die beiden Abdichteinheiten einen Prüfraum 26" an einer Muffe 60 an einem unverzweigten Kanalabschnitt des in Fig. 2 gezeigten Kanalsystems aus. Dabei sind die beiden Abdichteinheiten 10", 15" beiderseits der Muffe 60 angeordnet.

Bei den in den Figuren 1 bis 3 gezeigten Ausführungsbeispielen lassen sich die beiden Abdichteinheiten 10; 10'; 10", 15; 15'; 15" getrennt voneinander in den jeweiligen Rohrabschnitten führen. Bei dem Dichtpacker gemäß Figuren 4 und 5 hingegen sind die beiden Abdichteinheiten 10'', 15''', welche den Prüfraum 26''' ausbilden, auf einem gemeinsamen Träger 65 durch das Rohr 2' des Kanalsystems geführt. Der Träger weist dabei die Gestalt eines koaxial mit der Längsachse des Rohrs 2' orientierten Kreiszylinders auf, welcher einen gegenüber dem Umfang des Rohres 2' verringerten Umfang aufweist. So gelangen nur die Abdichteinheiten mit der Rohrwandung 5' des Rohres 2' zur Anlage. Der Dichtpacker stützt sich darüber hinaus mit einem Rad 70 an der Rohrwandung 5' ab, welches an der vom Prüfraum 26''' abgewandten Seite der Abdichteinheit 10''' angeordnet ist. Auch in dem Ausführungsbeispiel gemäß Fig. 4 und 5 ist der Dichtpacker zur Dichtheitsprüfung der Muffe 60 angeordnet. Dazu ist der Dichtpacker derart an die Muffe geführt, dass die beiden Abdichteinheiten 10''', 15''' beiderseits der Muffe 60 zur Anlage mit der Rohrwandung 5' gelangen.

Der in Fig. 4 und 5 dargestellte Dichtpacker wird durch einen Wagen 75 angetrieben, der über eine Kupplung 78 mit dem Träger 65 verbunden ist. Der Wagen 75 gliedert sich in einen ersten Wagenteil 80 und einen zweiten Wagenteil 85, welche über ein Gelenk 90 miteinander bewegungsgekoppelt sind. Über das Gelenk 90 kann der Wagen 75 auch durch ein verwinkeltes Rohrsystem geführt werden. In dem in Fig. 5 gezeigten Beispiel ist der Dichtpacker mit dem Wagen 75 durch den Schacht 50 des Kanalsystems und über die Verzweigung 45 in einen Abschnitt des Rohres 2' geführt. Die erforderliche Zuleitung von Druckluft, Luft zum Aufpumpen der Dichtkissen sowie elektrischer Energie geschieht über Schläuche 95, welche mittels einer Schlauchführung 100 durch die Verzweigung 45 geführt werden. Auf diese Weise sind die Schläuche 95 von Kanten der Rohrwandung 5' an der Verzweigung 45 beabstandet und es wird ein Verschleiß und/oder eine Beschädigung der Schläuche 95 verhindert.

### Bezugszeichenliste

- 2, 2': - Rohr
- 5, 5': - Rohrwandung
- 10, 10', 10", 10''': - Abdichteinheit eines Dichtpackers
- 15, 15', 15", 15''': - Abdichteinheit eines Dichtpackers
- 20, 20', 20": - Dichtkissen einer Abdichteinheit
- 21: - Luftzuführung
- 22: - Pumpe
- 24: - Drucksensor
- 26, 26', 26'', 26''': - Prüfraum
- 28: - Positioniermittel für die Abdichteinheit eines Dichtpackers
- 30: - Rauchmaschine als Prüfgasquelle
- 35: - Videokamera
- 45: - Verzweigung
- 50: - Schacht
- 52: - Erdoberfläche
- 55: - Schachtdeckel
- 60: - Muffe
- 65: - Träger
- 70: - Rad
- 75: - Wagen
- 78: - Kupplung
- 80: - Wagenteil
- 85: - Wagenteil
- 90: - Gelenk
- 95: - Schläuche
- 100: - Schlauchführung

## Patentansprüche

1. Verfahren zur Dichtheitsprüfung einer Abdichteinheit eines Dichtpackers an einer Rohrwandung (5, 5'), bei welchem in einem von der Abdichteinheit (10; 10'; 10"; 10''') in einem Rohrsystem begrenzten Prüfraum (26; 26'; 26"; 26''') ein Prüfgas eingebracht und/oder erzeugt wird und
im Anschluss geprüft wird, ob das Prüfgas an einer vom Prüfraum abgewandten Seite der Abdichteinheit (10; 10'; 10''; 10''') austritt, ohne dabei mit zusätzlichen Abdichteinheiten einen Referenzraum auszubilden

2. Verfahren nach einem der vorangehenden Ansprüche, bei welchem das Prüfgas mittels einer am oder im Prüfraum (26; 26'; 26"; 26''') angeordneten Prüfgasquelle (30) in den Prüfraum (26; 26'; 26''; 26''') eingebracht und/oder im Prüfraum (26; 26'; 26''; 26''') erzeugt wird.

3. Verfahren nach einem der vorangehenden Ansprüche, bei welchem das Prüfgas ein, vorzugsweise farbiges, Gas und/oder Aerosol enthält.

4. Verfahren nach einem der vorangehenden Ansprüche, bei welchem die Erzeugung des Prüfgases durch Temperatur- und/oder Dichteänderung eines bereits im Prüfraum (26; 26'; 26"; 26''') vorhandenen und/oder eingebrachten Stoffes oder durch eine chemische Reaktion erfolgt.

5. Verfahren nach einem der vorangehenden Ansprüche, bei welchem auf Austritt des Prüfgases an einer vom Prüfraum (26; 26'; 26"; 26''') abgewandten Seite der Abdichteinheit (10; 10'; 10"; 10''') mittels visueller Kontrolle, vorzugsweise unter Zuhilfenahme einer Kamera (35), geprüft wird.

6. Verfahren nach einem der vorangehenden Ansprüche, bei welchem auf Austritt des Prüfgases an einer vom Prüfraum (26; 26'; 26"; 26''') abgewandte Seite der Abdichteinheit (10; 10'; 10"; 10''') mittels eines Detektors geprüft wird.

7. Dichtpacker zum Prüfen der Dichtheit eines Rohrsystems mit zumindest einer Abdichteinheit (10; 10'; 10"; 10'''), welche zur dichtenden Anlage an einer Rohrwandung (5; 5') zur Begrenzung eines Prüfraumes (26; 26'; 26"; 26''') in dem Rohrsystem ausgebildet ist, wobei an dem Dichtpacker auf der dem Prüfraum (26; 26'; 26"; 26''') zugewandten Seite der zumindest einen Abdichteinheit (10; 10'; 10"; 10''') eine Prüfgasquelle (30) zum Ausbringen eines Prüfgases angeordnet ist und zusätzliche Abdichteinheiten zur Ausbildung eines Referenzraumes an der Abdichteinheit (10; 10'; 10"; 10''') nicht vorgesehen sind.

8. Dichtpacker nach Anspruch 7, welcher zumindest zwei voneinander beabstandete Abdichteinheiten (10; 10'; 10"; 10"', 15; 15'; 15"; 15''') zur Begrenzung des Prüfraumes (26; 26'; 26"; 26''') aufweist.

9. Dichtpacker nach einem der vorangehenden Ansprüche, bei welchem die Prüfgasquelle (30) zum Einbringen und/oder zur Erzeugung eines, vorzugsweise farbigen, Gases und/oder Rauchs in dem Prüfraum (26; 26'; 26"; 26''') vorgesehen ist.

10. Dichtpacker nach einem der vorangehenden Ansprüche, bei welchem die Prüfgasquelle (30) zur Temperatur- und/oder Dichteveränderung eines bereits im Prüfraum (26; 26'; 26"; 26''') vorhandenen und/oder eingebrachten Gases vorgesehen ist.

11. Dichtpacker nach einem der vorangehenden Ansprüche, bei welchem die Prüfgasquelle (30) einen Gasgenerator aufweist.

12. Dichtpacker nach einem der vorangehenden Ansprüche, bei welchem die Prüfgasquelle (30) ein Gasreservoir aufweist.

13. Dichtpacker nach einem der vorangehenden Ansprüche, bei welchem die Prüfgasquelle (30) eine Gaszuleitung zum Prüfraum (26; 26'; 26"; 26''') oder einen an den Prüfraum (26; 26'; 26"; 26''') angrenzenden Gasdurchlass aufweist.

14. Dichtpacker nach einem der vorangehenden Ansprüche, bei welchem auf der vom Prüfraum (26; 26'; 26"; 26''') abgewandten Seite der Abdichteinheit (10; 10'; 10"; 10''') ein auf das Prüfgas sensitiver Detektor (35) angeordnet ist.

15. Vorrichtung nach einem der vorangehenden Ansprüche, bei welcher auf der vom Prüfraum (26; 26'; 26"; 26''') abgewandten Seite der Abdichteinheit (10; 10'; 10"; 10''') eine Kamera (35) zur visuellen Kontrolle der Abdichteinheit (10; 10'; 10"; 10''') angeordnet ist.
